(19) Europäisches Patentamt
European Patent Office
Office européen des brevets

(11) Numéro de publication: **0 347 315 B1**

(12) **FASCICULE DE BREVET EUROPEEN**

(45) Date de publication de fascicule du brevet: **29.09.93** (51) Int. Cl.$^5$: **G21F 9/00**

(21) Numéro de dépôt: **89401664.1**

(22) Date de dépôt: **14.06.89**

(54) **Procédé pour séparer au moyen d'éthers-couronnes l'uranium et le plutonium présents dans un milieu aqueux provenant du retraitement des combustibles nucléaires irradiés.**

(30) Priorité: **16.06.88 FR 8808076**

(43) Date de publication de la demande:
**20.12.89 Bulletin 89/51**

(45) Mention de la délivrance du brevet:
**29.09.93 Bulletin 93/39**

(84) Etats contractants désignés:
**BE DE ES GB IT SE**

(56) Documents cités:

**CHEMICAL ABSTRACTS, vol. 89, 1978, page 363, abstract no. 95789p, Columbus, Ohio, US; V.V. YAKSHIN et al.: ""Crowns" in the extraction of uranium and actinides from nitric acid solutions", & DOKL. AKAD. NAUK SSSR 1978, 241(1), 159-62**

**CHEMICAL ABSTRACTS, vol. 97, 1982, page 398, abstract no. 61870h, Columbus, Ohio, US; A.M. ROZEN et al.: "Extraction of actinides and nitric acid by crown ethers", & DOKL. AKAD. NAUK SSSR 1982, 263(5), 1165-9**

(73) Titulaire: **COMPAGNIE GENERALE DES MATIERES NUCLEAIRES (COGEMA)**
**2, rue Paul Dautier B.P. 4**
**F-78141 Velizy-Villacoublay Cédex(FR)**

(72) Inventeur: **Foos, Jacques**
**33 rue Louis Scocard**
**F-91400 Orsay(FR)**
Inventeur: **Epherre, Pierre**
**10 Route de la Remarde**
**F-91530 Saint Cheron(FR)**
Inventeur: **Guy, Alain**
**1, rue Urgons**
**F-77135 Pontcarré(FR)**
Inventeur: **Lemaire, Marc**
**30 rue Salvador Allendé**
**F-92000 Nanterre(FR)**
Inventeur: **Chomel, Rodolph**
**328 Avenue de Champlain**
**F-84100 Orange(FR)**
Inventeur: **Cauquil, Gérard**
**Rue du Chemin Neuf Codolet**
**F-30200 Bagnols-sur-Ceze(FR)**
Inventeur: **Patigny, Pierre**
**Hameau de la Butte**
**F-50130 Octeville(FR)**

**EP 0 347 315 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

CHEMICAL ABSTRACTS, vol. 98, 1983, page 451, abstract no. 167906k, Columbus, Ohio, US; W. WANG et al.: "Extraction of several lanthanide and actinide radionuclides with crown ethers", & J. RADIOANAL. CHEM. 1983, 76(1), 49-62

CHEMICAL ABSTRACTS, vol. 106, 1987, page 463, abstract no. 126794n, Columbus, Ohio, US; S. XU et al.: "Extraction of uranium(VI) with a series of five DCH (dicyclohexyl) crown ethers in hydrochloric acid medium", & YUANZINENG KEXUE JISHU 1986, 20(4), 425-30

CHEMICAL ABSTRACTS, vol. 102, 1985, page 394, abstract no. 68166p, Columbus, Ohio, US; M. BRIGHLI et al.: "Discussion on the complexing ability of the uranylion with several crown ethers and cryptands in water and in propylene carbonate",& INORG. CHEM. 1985, 24(1), 80-4

Inventeur: **Vian, Alain**
**4 rue du Vermondois**
**F-50130 Octeville(FR)**

(74) Mandataire: **Mongrédien, André et al**
**c/o BREVATOME 25, rue de Ponthieu**
**F-75008 Paris (FR)**

## Description

L'invention a pour objet un procédé de séparation de l'uranium et du plutonium présents dans une solution aqueuse acide provenant du retraitement des combustibles nucléaires irradiés.

De façon plus précise, elle concerne un procédé dans lequel on sépare l'uranium et le plutonium d'une solution aqueuse par extraction et transport dans une phase liquide organique.

Depuis plusieurs années la technique la plus largement utilisée pour réaliser le retraitement des combustibles nucléaires irradiés consiste à dissoudre le combustible dans une solution nitrique, à mettre ensuite la solution aqueuse nitrique obtenue en contact avec un solvant organique pour extraire dans celui-ci l'uranium et le plutonium et les séparer de la majorité des produits de fission, à réextraire l'uranium du plutonium dans une phase aqueuse et à séparer l'uranium et le plutonium présents dans cette phase aqueuse au moyen d'un solvant organique. Le solvant organique utilisé est généralement le phosphate de tributyle.

Bien que ce solvant donne des résultats très satisfaisants, il présente l'inconvénient d'avoir une résistance aux rayonnements insuffisante car il se dégrade par radiolyse en produits tels que l'acide dibutylphosphorique qui sont gênants pour l'extraction. De plus, lorsqu'on sépare l'uranium du plutonium en utilisant ce solvant, il est nécessaire d'effectuer préalablement une étape de réduction du plutonium afin de maintenir celui-ci en solution aqueuse et d'extraire l'uranium (VI) dans le phosphate de tributyle. Ceci nécessite des étapes complémentaires et l'introduction d'agents réducteurs et de stabilisants qui sont gênants pour la suite du traitement.

Aussi, de nombreuses recherches ont été effectuées sur d'autres solvants susceptibles d'être utilisés afin d'éviter ces inconvénients.

La présente invention a précisément pour objet un procédé de séparation de l'uranium et du plutonium présents dans une solution aqueuse acide provenant du retraitement des combustibles nucléaires irradiés, qui permet de réaliser la séparation uranium-plutonium sans qu'il soit nécessaire d'effectuer une réduction du plutonium et qui utilise un ligand organique ayant une résistance à la dégradation par radiolyse meilleure que celle du phosphate de tributyle.

Ce procédé consiste à mettre en contact la solution aqueuse acide contenant l'uranium et le plutonium avec une phase liquide organique et il se caractérise en ce que la phase organique comprend au moins un éther-couronne.

Les éthers-couronnes sont des composés macrocycliques ayant des propriétés complexantes vis-à-vis de nombreux métaux. Ainsi, les propriétés complexantes de certains éthers-couronnes vis-à-vis de l'uranium et du plutonium ont été décrites par Yaskin et al dans Dokl. Akad. Nank. SSSR, 241, 159, (1978) mais ces auteurs n'ont ni décrit, ni suggéré que l'on pouvait avec ces éthers-couronnes séparer simultanément l'uranium et le plutonium des produits de fission et extraire et transporter sélectivement l'uranium dans une phase aqueuse pour le séparer du plutonium, comme on le verra ci-après.

En effet, Yaskin et coll. ont étudié l'extraction de l'uranium, du plutonium et du neptunium à partir de solutions séparées contenant uniquement l'élément à extraire en utilisant des solutions d'actinides purifiées et diluées à des concentrations de $5.10^{-5}$ à $5.10^{-6}$ mol/l d'actinide, ce qui rend leurs résultats difficilement transposables à des solutions industrielles de concentrations et d'acidité élevées. Par ailleurs, ils n'ont effectué aucune étude sur des solutions contenant simultanément des produits de fission comme dans le cas des solutions de retraitement des combustibles irradiés.

Dans le procédé de l'invention, on peut utiliser tous les types d'éthers-couronnes, par exemple ceux décrits dans le livre de E. Weber "Crown Compounds - Properties and Practice", p. 34-82. Ainsi, on peut utiliser les éthers-couronnes répondant aux formules :

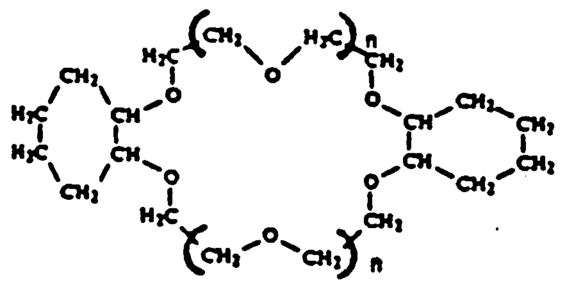

(I)

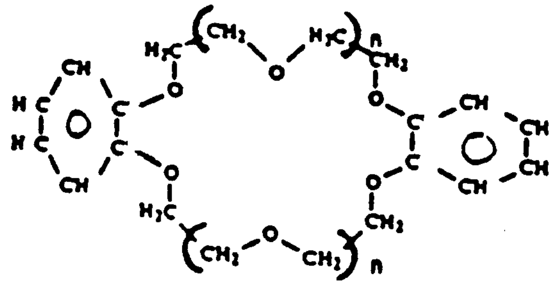

(II)

dans lesquelles n est égal à 0, ou est un nombre entier allant de 1 à 4.

A titre d'exemples de tels éthers-couronnes, on peut citer ceux de formule (I) pour lesquels n = 1 (DCH 18C6)ou n = 2 (DCH 24C8), et ceux de formule (II) pour lesquels n = 1 (DB 18C6) et n = 2.

On peut encore utiliser les éthers-couronnes répondant aux formules suivantes :

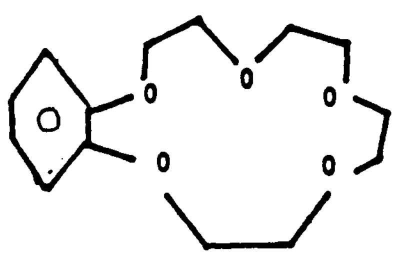

(III)

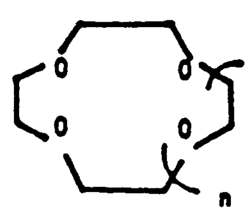

(IV)

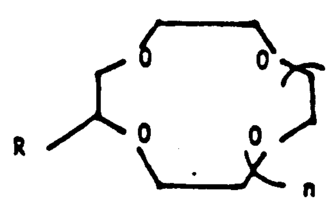

(V)

dans lesquelles n = 0, 1 ou 2.

De préférence, on utilise les éthers-couronnes de formule (I) ou (II) avec n = 1 ou 2, lorsqu'on veut réaliser simultanément la séparation uranium-plutonium. On peut aussi utiliser l'éther-couronne de formule IV avec n = 2.

Ces éthers-couronnes sont de plus très intéressants car ils résistent bien aux rayonnements. En effet, on n'a observé aucune modification de ces éthers-couronnes après irradiation pendant 140h à un débit de dose de 120krad/h.

Généralement la phase liquide organique est constituée par un solvant organique contenant au moins un éther-couronne.

Le solvant organique peut être plus dense que la solution aqueuse d'uranium comme par exemple les solvants chlorés tels que $CHCl_3$, $CH_2Cl_2$, $CCl_3CH_3$, $CHCl_2CHCl_2$, $ClCH_2CH_2Cl$ et le dichlorobenzène. On peut aussi utiliser des solvants organiques moins denses que la solution aqueuse d'uranium, par exemple l'éther, l'heptane, le dodécane, le benzonitrile ou des solvants aromatiques tels que le benzène et les alkylbenzènes.

A titre d'exemple, on peut utiliser un solvant organique choisi parmi le chloroforme, le chlorure de méthylène, le trichloréthylène, et les solvants aromatiques tels que le benzonitrile, le benzène et les alkylbenzènes.

La concentration en éther-couronne de la phase organique est choisie en fonction du solvant de façon à extraire sélectivement une quantité maximale de plutonium et d'uranium tout en laissant les produits de fission en solution aqueuse. On choisit une concentration en éther-couronne de telle sorte que l'on obtienne une phase liquide parfaitement homogène dans laquelle ne se pose aucun problème de cristallisation de l'éther-couronne.

Généralement, avec les solvants organiques mentionnés ci-dessus, la phase organique comprend de 2 à 33% en volume d'éthers-couronnes et de 67 à 98% en volume de solvant organique.

Les solutions aqueuses contenant l'uranium et le plutonium traitées par le procédé de l'invention, sont les solutions acides obtenues soit après dissolution des combustibles nucléaires irradiés, soit après le premier cycle de séparation de l'uranium et du plutonium des produits de fission. Il s'agit généralement de solutions nitriques contenant, dans le premier cas, l'uranium, le plutonium et les produits de fission présents dans la solution de dissolution de combustibles irradiés et, dans le deuxième cas, l'uranium et le plutonium séparés des produits de fission dans un premier cycle tel qu'un cycle d'extraction au moyen de phosphate de tributyle suivi d'une réextraction dans une solution aqueuse nitrique.

La concentration en acide nitrique de la solution de départ exerce une influence sur l'extraction de l'uranium et du plutonium ainsi que sur la séparation uranium-plutonium / produits de fission.

En effet, les taux d'extraction de U et Pu augmentent avec la concentration en acide nitrique alors que le taux d'extraction des produits de fission diminue lorsque la concentration en acide nitrique augmente.

Généralement, on utilise des concentrations en acide nitrique de 1 à 5 N. Toutefois, pour obtenir un bon taux d'extraction du plutonium avec une bonne séparation uranium-plutonium, il est préférable d'utiliser des solutions aqueuses contenant 1 à 2 mol/l d'acide nitrique.

Le procédé de l'invention peut être mis en oeuvre de différentes façons selon que l'on veut réaliser simultanément ou non la séparation de l'uranium et du plutonium présents dans la solution aqueuse de départ.

Lorsqu'on veut réaliser simultanément cette séparation de l'uranium et du plutonium, on utilise la phase liquide organique contenant l'éther-couronne comme phase d'extraction et comme moyen pour transporter sélectivement l'uranium de la solution aqueuse de départ dans une solution réceptrice.

En effet, l'une des propriétés intéressantes des éthers-couronnes est que, bien qu'ils extraient plus efficacement le plutonium que l'uranium, ils transportent l'uranium beaucoup plus rapidement que le plutonium entre deux phases aqueuses.

Aussi, cette propriété peut être mise à profit pour réaliser la séparation uranium-plutonium au 1er stade du retraitement des combustibles irradiés.

Dans ce cas, la phase liquide organique forme une membrane liquide comportant une première et une deuxième surfaces de contact, on met en contact la solution aqueuse de départ avec la première surface de la membrane liquide et on fait circuler au contact de la deuxième surface de la membrane liquide une solution réceptrice pour transférer sélectivement l'uranium dans la solution réceptrice.

En effet, bien que le plutonium soit extrait à des concentrations élevées dans la phase liquide organique, la cinétique d'extraction du plutonium est plus lente que celle de l'uranium et sa vitesse de transport dans la membrane liquide organique est également moins élevée que celle de l'uranium. Ainsi, on peut concentrer le plutonium dans la membrane liquide organique et récupérer une solution réceptrice enrichie en uranium.

Dans ce mode de mise en oeuvre du procédé, la solution aqueuse de départ peut être une solution aqueuse provenant du stade de dissolution des combustibles nucléaires irradiés, qui contient simultanément l'uranium, le plutonium et les produits de fission, et l'on peut ainsi séparer en un seul stade, le plutonium, l'uranium et les produits de fission sans qu'il soit nécessaire de réduire le plutonium.

On peut aussi utiliser comme solution aqueuse de départ la phase aqueuse contenant l'uranium et le plutonium obtenue actuellement dans les installations de retraitement de combustibles nucléaires irradiés après le premier cycle de séparation des produits de fission. Dans ce cas, on peut réaliser également la séparation uranium-plutonium sans qu'il soit nécessaire de réduire le plutonium.

Dans ce mode de mise en oeuvre du procédé de l'invention, la solution réceptrice peut être de l'eau ou une solution nitrique. Généralement, on utilise une solution nitrique ayant une concentration en acide nitrique de 1 à 7mol/l. En effet, comme pour l'extraction, une forte concentration en acide nitrique est favorable à l'élimination sélective de l'uranium et des produits de fission dans la solution réceptrice.

Pour mettre en oeuvre le procédé de l'invention, on utilise des appareillages de mise en contact classiques et on opère généralement à la température ambiante et sous la pression atmosphérique.

Les durées de contact et les volumes des solutions mises en contact sont choisis en fonction du résultat que l'on veut obtenir.

Ainsi, dans le cas où l'on veut séparer l'uranium du plutonium, les durées de contact sont faibles pour que le plutonium ne soit que très peu transporté dans la solution réceptrice.

En revanche, lorsqu'on veut extraire simultanément l'uranium et le plutonium dans la phase aqueuse réceptrice et les séparer des produits de fission, on utilise des temps de contact plus longs.

Selon l'invention, on peut aussi réaliser plusieurs lavages successifs par des solutions nitriques de la phase liquide organique dans laquelle ont été extraits le plutonium et l'uranium. Ainsi, on peut améliorer le taux de récupération et la pureté du plutonium en solution aqueuse obtenus après réextraction.

D'autres caractéristiques et avantages de l'invention apparaîtront mieux à la lecture des exemples suivants donnés bien entendu à titre illustratif et non limitatif, en référence au dessin annexé sur lequel :

- la figure 1 représente schématiquement une installation de séparation de l'uranium et du plutonium par extraction et transport simultanés dans une membrane liquide,
- la figure 2 représente une variante de l'installation de la figure 1, et
- la figure 3 représente de façon schématique une installation conforme à l'invention pour séparer le plutonium et l'uranium de solutions aqueuses par extraction et transport successifs.

**Exemple 1.**

Dans cet exemple on utilise l'éther-couronne DCH 18C6, c'est-à-dire l'éther-couronne de formule (I) avec n = 1 pour traiter une solution aqueuse contenant de l'uranium, du plutonium et des produits de fission.

Dans cet exemple, la solution de départ contient 300g/l d'uranium (VI), 1,2g/l de plutonium (IV) et 1.18TBq/l (32Ci/l) de produits de fission, et elle a une concentration en acide nitrique de 1,8mol/l. Pour réaliser l'extraction, on met en contact un volume de cette solution aqueuse avec 2 volumes d'une phase liquide organique constituée par l'éther-couronne DCH 18 C6 du commerce qui est un mélange d'isomères, dilué dans du chloroforme avec une concentration en éther-couronne de 25% en volume. Après mise en contact pendant 10min, on sépare les phases par décantation et on détermine les concentrations en plutonium, en uranium et en produits de fission de la phase organique, ce qui permet de calculer les pourcentages de plutonium, d'uranium et de produits de fission extraits dans la phase organique.

Les résultats obtenus sont donnés dans le tableau 1.

Tableau 1

| Réf. | Extractant | % Pu | % U | % PF |
|---|---|---|---|---|
| Exemple 1 | DCH 18 C6 | 89 | 33 | 0,6 |
| Exemple comparatif 1 | TBP | 12,5 | 34 | $10^{-4}$ |

Ainsi, le pourcentage de plutonium extrait est très important puisqu'il représente 89% du plutonium d'origine.

**Exemple comparatif 1.**

Dans cet exemple, on suit le même mode opératoire que dans l'exemple 1 pour traiter une solution aqueuse ayant les mêmes concentrations en uranium, en plutonium, en produits de fission et en acide nitrique, mais en utilisant comme phase organique du phosphate de tributyle dans du TPH (triméthyl-2,4,6-nonane) avec une concentration en phosphate de tributyle de 27,5% en volume. On détermine comme dans l'exemple 1 les pourcentages de plutonium, d'uranium et de produits de fission extraits dans la phase organique.

Les résultats obtenus sont donnés également dans le tableau 1.

Au vu de ces résultats, on constate que le procédé de l'invention permet d'améliorer de façon importante le taux d'extraction du plutonium qui passe de 12,5% à 89% avec l'invention.

**Exemple 2.**

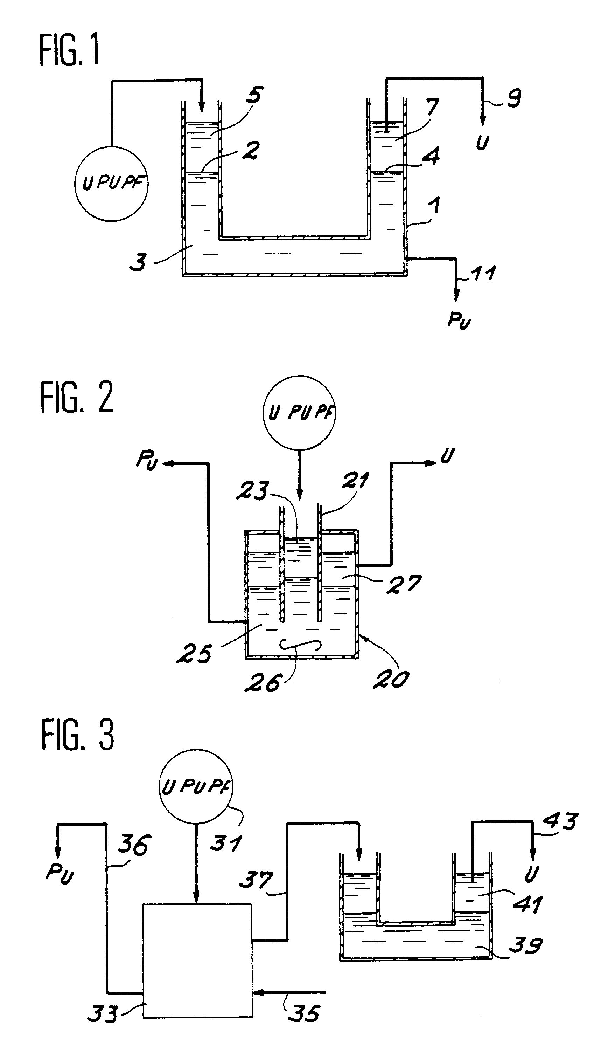

Dans cet exemple, on utilise l'installation représentée schématiquement sur la figure 1 pour extraire et transporter simultanément l'uranium d'une solution aqueuse de retraitement contenant de l'uranium, du plutonium et des produits de fission, et le séparer ainsi du plutonium.

Cette extraction et ce transport sont réalisés à travers une membrane liquide organique constituée de chlorure de méthylène contenant 6% en volume de l'éther-couronne DCH 18 C6 de l'exemple 1.

Sur cette figure, on voit que l'appareillage est constitué par un récipient en U au fond duquel on met une grande quantité de phase organique (3) contenant l'éther-couronne qui constitue la membrane liquide. Dans l'une des branches du récipient en U, on dispose au-dessus de la membrane liquide la solution aqueuse à traiter (5) qui contient l'uranium, le plutonium et les produits de fission, et dans l'autre branche du tube en U, on dispose au-dessus de la membrane liquide (3) une solution réceptrice (7). La membrane liquide (3) comporte ainsi une première surface de contact (2) avec la solution aqueuse contenant l'uranium et le plutonium à extraire et une deuxième surface de contact (4) avec la solution aqueuse réceptrice.

Dans ces conditions, l'uranium, le plutonium et les produits de fission présents dans la solution aqueuse de départ (5) sont extraits par la membrane liquide (3), puis transportés par cette membrane vers la deuxième surface de contact (4) où ils sont réextraits par la solution réceptrice (7). Avec les membranes liquides conformes à l'invention qui contiennent un éther-couronne, on extrait dans la phase organique un pourcentage très important du plutonium présent dans la solution aqueuse de départ et des quantités moins importantes d'uranium et de produits de fission. Cependant, l'uranium et les produits de fission sont transportés plus rapidement au travers de la membrane liquide et réextraits de ce fait dans la solution réceptrice (7), alors que le plutonium qui est transporté moins rapidement, se concentre dans la membrane liquide.

Dans cet exemple, on part d'une solution aqueuse contenant 3mol/l d'acide nitrique, 248g/l d'uranium, 2g/l de plutonium et 5.1GBq/l (137mCi/l) de produits de fission (PF) dont le ruthénium utilisé comme traceur et la solution réceptrice est une solution aqueuse contenant de 1 à 5mol/l de $HNO_3$. Après 2 h 30 de mise en contact, on détermine les concentrations en uranium, plutonium et ruthénium de la solution réceptrice (7) et de la membrane liquide (3) pour déterminer les pourcentages d'uranium, de plutonium et de ruthénium extraits dans ces différentes phases.

Les résultats obtenus sont donnés dans le tableau 2 qui suit.

Tableau 2

| Répartition des cations après 2h30 | U | Pu | Ru | U Pu |
|---|---|---|---|---|
| Solution initiale (5) | 248g/l | 2g/l | 137mCi/l | |
| Solution (5) après 2h30 | 36 % | 6 % | 80% | 766 |
| Solution (7) après 2h30 | 65 % | 44 % | 13% | 178 |
| Membrane liquide (3) après 2h30 | 0 % | 50 % | 12% | |

Au vu de ces résultats, on constate que la solution réceptrice est enrichie en uranium et appauvrie en plutonium.

Ainsi, en utilisant une installation de séparation du type de celle de la figure 1 fonctionnant en continu, on peut récupérer à la sortie de l'installation par la conduite 9 une solution aqueuse enrichie en uranium et par la conduite 11 une solution organique enrichie en plutonium.

On pourrait obtenir le même résultat en utilisant l'installation représentée sur la figure 2.

Dans ce cas, l'installation comporte une cheminée centrale (21) par laquelle on introduit la solution aqueuse à traiter (23) qui contient de l'uranium, du plutonium et des produits de fission. Au fond du récipient, on dispose la phase organique constituée d'éther-couronne et de solvant organique qui forme une membrane liquide (25) agitée par l'agitateur (26). La solution réceptrice (27) est introduite dans la couronne externe.

Dans ces conditions, on obtient, de la même façon, une extraction du plutonium et de l'uranium dans la phase organique (25) puis le transport de l'uranium dans la solution réceptrice (27).

**Exemple 3**.

Dans cet exemple, or utilise l'installation représentée sur la figure 2 et on introduit en (23) une solution aqueuse contenant 249g/l d'uranium, 2g/l de plutonium ainsi que des produits de fission. La membrane liquide (25) est constituée par 1g de DCH 18 C6 de l'exemple 1 dans 50ml de $CH_2Cl_2$ et la solution réceptrice (27) est constituée par 30ml d'eau.

En réalisant la mise en contact pendant une journée et en déterminant alors les teneurs respectives en uranium et en plutonium des phases, 23, 25 et 27, on a constaté qu'environ 62% de l'uranium et 95% du plutonium présents initialement se retrouvent dans la solution réceptrice (27) alors que les produits de fission sont très peu transportés dans la membrane liquide (25).

Ainsi, en choisissant la durée de contact entre la solution aqueuse de départ, la membrane liquide et la solution réceptrice, on peut, soit assurer l'extraction et le transport complet de l'uranium et du plutonium, ou assurer comme précédemment une extraction et un transport sélectif de l'uranium en faisant varier la concentration en acide nitrique de la phase de lavage on peut contrôler et améliorer la sélectivité.

Sur la figure 3, on a représenté schématiquement une autre installation de mise en oeuvre du procédé de l'invention dans laquelle on réalise successivement l'extraction du plutonium et le transport de l'uranium dans une solution aqueuse.

Dans ce cas, la solution aqueuse de départ (31) contenant U, Pu et les produits de fission est tout d'abord mise en contact (en 33) avec une phase liquide organique contenant un éther-couronne introduite (en 35). Après mise en contact, on recueille (en 36) une phase organique contenant Pu et (en 37) une phase aqueuse appauvrie en Pu contenant U et les produits de fission.

L'uranium présent dans cette phase aqueuse (37) est extrait et transporté ensuite sélectivement par la membrane liquide organique (39) qui contient un éther-couronne, dans la solution réceptrice (41). On peut ainsi recueillir (en 43) une solution aqueuse enrichie en uranium.

**Revendications**

1. Procédé pour séparer l'uranium et le plutonium d'une solution aqueuse acide provenant du retraitement de combustibles nucléaires irradiés, par mise en contact de cette solution avec une phase liquide organique, caractérisé en ce que la phase organique comprend au moins un éther-couronne.

2. Procédé selon la revendication 1, caractérisé en ce que l'éther-couronne répond aux formules :

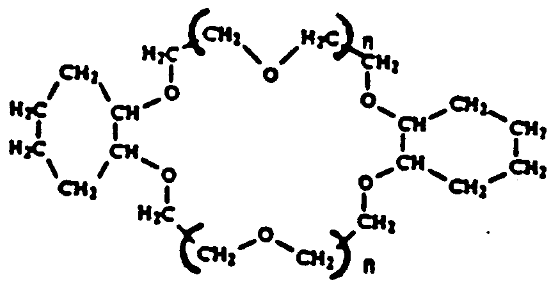 (I)

ou

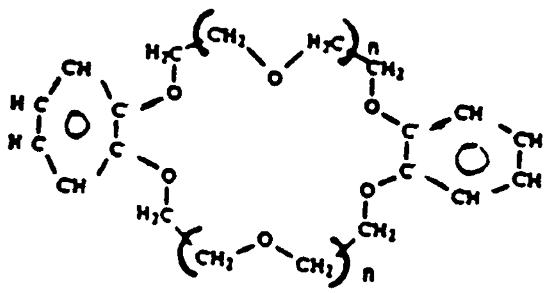 (II)

dans lesquelles n = 0 ou est un nombre entier allant de 1 à 4.

3. Procédé selon la revendication 2, caractérisé en ce que n est égal à 1 ou 2.

4. Procédé selon l'une quelconque des revendications 1 à 3, caractérisé en ce que la solution aqueuse acide est une solution nitrique.

5. Procédé selon la revendication 4, caractérisé en ce que la concentration en acide nitrique de cette solution aqueuse est de 1 à 5N.

6. Procédé selon l'une quelconque des revendications 1 à 5, caractérisé en ce que la phase liquide organique est constituée par un solvant organique contenant au moins un éther-couronne.

7. Procédé selon la revendication 6, caractérisé en ce que la phase organique comprend 2 à 33% en volume d'un ou plusieurs éthers-couronnes et 67 à 98% en volume de solvant organique.

8. Procédé selon l'une quelconque des revendications 6 et 7, caractérisé en ce que le solvant organique est choisi parmi le chloroforme, le chlorure de méthylène, le trichloréthylène, et les solvants aromatiques tels que le benzonitrile, le benzène et les alkylbenzènes.

9. Procédé selon l'une quelconque des revendications 1 à 8, caractérisé en ce que la phase liquide organique forme une membrane liquide comportant une première et une deuxième surfaces de contact, en ce que l'on met en contact la solution aqueuse avec la première surface de la membrane liquide et en ce que l'on fait circuler au contact de la deuxième surface de la membrane liquide une solution réceptrice pour transférer sélectivement l'uranium dans la solution réceptrice.

**10.** Procédé selon la revendication 9, caractérisé en ce que la solution réceptrice est une solutions nitrique ayant une concentration en acide nitrique de 1 à 7mol/l.

## Claims

**1.** Process for separating the uranium and plutonium from an acid aqueous solution resulting from the reprocessing of irradiated nuclear fuels by contacting said solution with an organic liquid phase, characterized in that the organic phase comprises at least one crown ether.

**2.** Process according to claim 1, characterized in that the crown ether complies with the formulas:

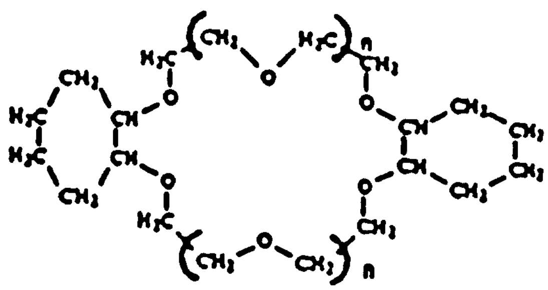

(I)

or

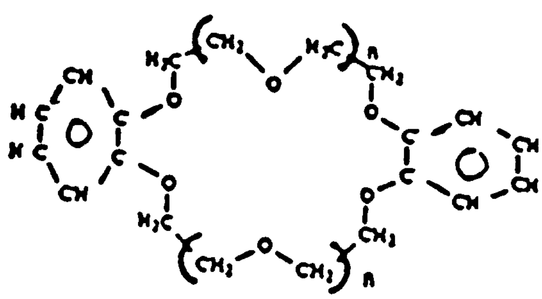

(II)

in which n = 0 or an integer between 1 and 4.

**3.** Process according to claim 2, characterized in that n is equal to 1 or 2.

**4.** Process according to any one of the claims 1 to 3, characterized in that the aqueous acid solution is a nitric solution.

**5.** Process according to claim 4, characterized in that the nitric acid concentration of said aqueous solution is 1 to 5N.

**6.** Process according to any one of the claims 1 to 5, characterized in that the organic liquid phase is constituted by an organic solvent containing at least one crown ether.

**7.** Process according to claim 6, characterized in that the organic phase comprises 2 to 33% by volume of one or more crown ethers and 67 to 98% by volume of organic solvent.

**8.** Process according to any one of the claims 6 and 7, characterized in that the organic solvent is chosen from among chloroform, methylene chloride, trichloroethylene and aromatic solvents such as benzonitrile, benzene and alkyl benzenes.

9. Process according to any one of the claims 1 to 8, characterized in that the organic liquid phase forms a liquid membrane having first and second contact surfaces, in that the aqueous solution is contacted with the first liquid membrane surface and in that a receiving solution is circulated in contact with the second liquid membrane surface for selectively transferring the uranium into the receiving solution.

10. Process according to claim 9, characterized in that the receiving solution is a nitric solution with a nitric acid concentration of 1 to 7 mole/l.

**Patentansprüche**

1. Verfahren zur Trennung von Uran und Plutonium aus einer sauren wäßrigen, aus der Wiederaufarbeitung von bestrahlten Kernbrennstoffen stammenden Lösung durch Zusammenbringen dieser Lösung mit einer flüssigen organischen Phase, dadurch gekennzeichnet, daß die organische Phase wenigstens einen Kronenether umfaßt.

2. Verfahren nach Anspruch 1, dadurch gekennzeichnet, daß der Kronenether den Formeln

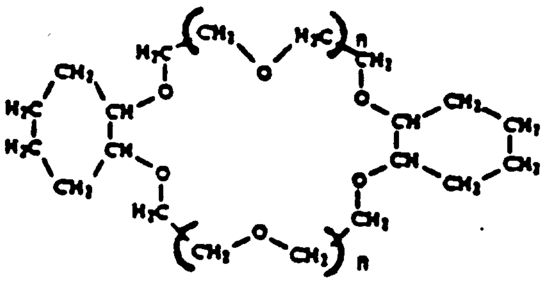
(I)

oder

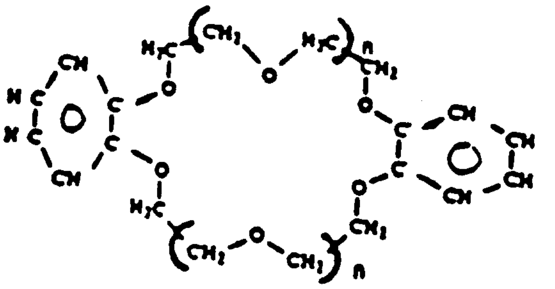
(II)

entspricht, worin n gleich 0 oder gleich einer ganzen Zahl von 1 bis 4 ist.

3. Verfahren nach Anspruch 2, dadurch gekennzeichnet, daß n gleich 1 oder 2 ist.

4. Verfahren nach einem der Ansprüche 1 bis 3, dadurch gekennzeichnet, daß die saure wäßrige Lösung eine salpetersaure Lösung ist.

5. Verfahren nach Anspruch 4, dadurch gekennzeichnet, daß die Salpetersäurekonzentration dieser wäßrigen Lösung 1 bis 5 N ist.

6. Verfahren nach einem der Ansprüche 1 bis 5, dadurch gekennzeichnet, daß die flüssige organische Phase aus einem organischen Lösungsmittel gebildet wird, das wenigstens einen Kronenether enthält.

7. Verfahren nach Anspruch 6, dadurch gekennzeichnet, daß die organische Phase 2 bis 33 Vol.-% eines oder mehrerer Kronenether und 67 bis 98 Vol.-% organisches Lösungsmittel enthält.

**8.** Verfahren nach einem der Ansprüche 6 und 7, dadurch gekennzeichnet, daß das organische Lösungsmittel unter Chloroform, Methylenchlorid, Trichlorethylen und den aromatischen Lösungsmitteln wie Benzonitril, Benzol und den Alkylbenzolen gewählt wird.

**9.** Verfahren nach einem der Ansprüche 1 bis 8, dadurch gekennzeichnet, daß die flüssige organische Phase eine flüssige Membran bildet, die eine erste und eine zweite Kontaktfläche umfaßt, daß man die wäßrige Lösung mit der ersten Fläche der flüssigen Membran zusammenbringt und daß man im Kontakt mit der zweiten Fläche der flüssigen Membran eine aufnehmende Lösung umwälzt, um selektiv das Uran in die aufnehmende Lösung zu überführen.

**10.** Verfahren nach Anspruch 9, dadurch gekennzeichnet, daß die aufnehmende Lösung eine salpetersaure Lösung ist, die eine Konzentration an Salpetersäure von 1 bis 7 mol/l hat.

FIG. 1

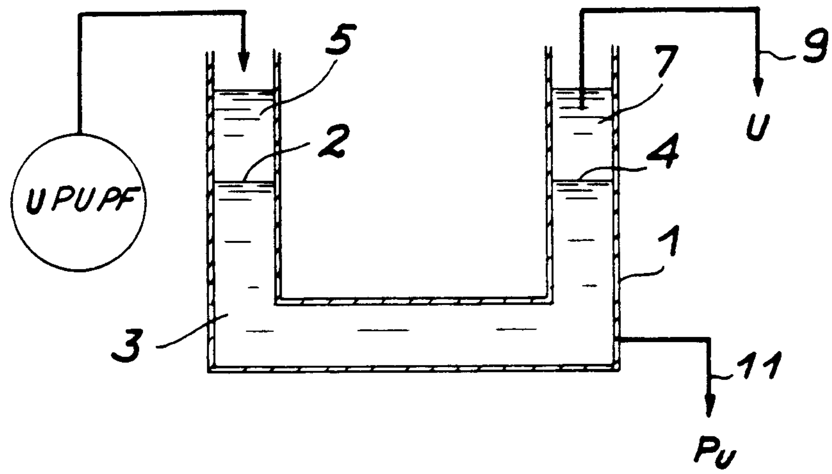


FIG. 2

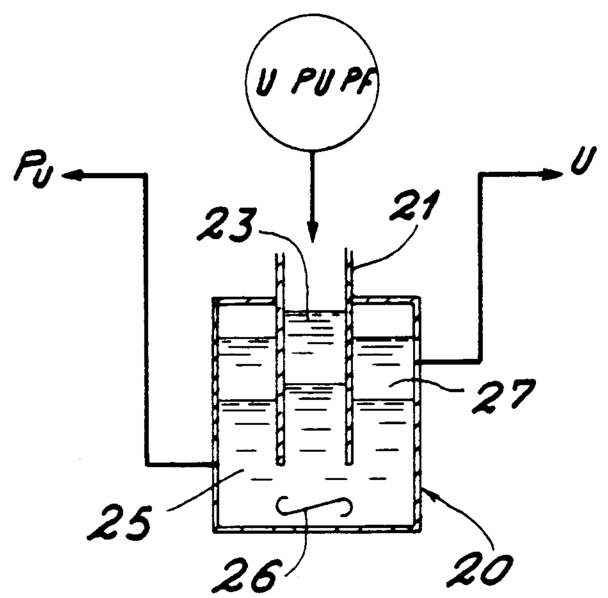


FIG. 3